Europäisches Patentamt

European Patent Office

Office européen des brevets

(11) Veröffentlichungsnummer: **0 295 560**
**A2**

(12) **EUROPÄISCHE PATENTANMELDUNG**

(21) Anmeldenummer: **88109122.7**

(22) Anmeldetag: **08.06.88**

(51) Int. Cl.4: **G02C 5/22**

(30) Priorität: **15.06.87 DE 3719955**

(43) Veröffentlichungstag der Anmeldung:
**21.12.88 Patentblatt 88/51**

(84) Benannte Vertragsstaaten:
**AT CH ES FR IT LI**

(71) Anmelder: **Obergfell, Bernhard**
**Hauptstrasse 215**
**D-7819 Denzlingen(DE)**

(72) Erfinder: **Obergfell, Bernhard**
**Hauptstrasse 215**
**D-7819 Denzlingen(DE)**

(74) Vertreter: **Patentanwälte Dipl.-Ing. Hans**
**Schmitt Dipl.-Ing. Wolfgang Maucher**
**Dreikönigstrasse 13**
**D-7800 Freiburg i.Br.(DE)**

(54) **Brillenscharnier und Verfahren zu seiner Herstellung bzw. Montage.**

(57) Ein Brillenscharnier (1) mit zwei einen Zwischenraum (10) zwischen sich aufweisenden Haltern (4 und 9) und einem diesen Zwischenraum in Gebrauchsstellung überbrückenden Verbindungsteil (7) hat zunächst einen die beiden beabstandeten Halter (4 und 9) verbindenden Steg (18) und wird in dieser verbundenen Form an dem Brillenbügel (8) und dessen Fortsetzung (2) zur Brillenfassung hin vor dem Abtrennen des Brillenbügels von dieser Fortsetzung befestigt. Sodann erfolgt eine gemeinsame Trennung des Brillenbügels von seiner Fortsetzung und der beiden Halter (4 und 9) voneinander, wonach der Verbindungsteil in die beiden Halter eingesetzt werden kann. Dies ergibt eine präzise und schnelle Befestigung des gesamten Brillenscharnieres.

FIG. 1

EP 0 295 560 A2

## Brillenscharnier und Verfahren zu seiner Herstellung bzw. Montage

Die Erfindung betrifft ein Brillenscharnier mit einem an der Brillenfassung befestigten Scharnierteil, welches zwei in Gebrauchsstellung übereinanderliegende Halter mit miteinander fluchtenden Durchtrittsöffnungen für einen Scharnierstift zum Befestigen eines in den Abstand zwischen diesen beiden Haltern passenden plättchenförmigen Verbindungsteiles aufweist, welches Verbindungsteil mit einem weiteren Haltestift an am Brillenbügel vorgesehenen, übereinander angeordneten Haltern mittels einem weiteren Haltestift befestigt ist, wobei das Verbindungsteil auf der einen Seite als Teil Scharnieres ausgebildet und auf der anderen Seite formschlüssig verbunden und an den Haltern lösbar befestigt ist, die beiden jeweils beabstandeten Halter in Gebrauchsstelung in Richtung der Erstreckung des Brillenbügels und/oder des Verbindungsteiles einen lichten Abstand und Zwischenraum zwischen sich haben, welcher von dem Verbindungsteil überbrückt ist, und wobei die Stärke des Verbindungsteiles zumindest in dem von ihm überbrückten Zwischenraum so gering gewählt ist, daß der Zwischenraum eine Sollbruchstelle an dem Verbindungsteil ist.

Die Erfindung betrifft ferner ein Verfahren zu Herstellung und/oder Montage eines Brillenscharniers der vorstehend genannten Art.

Ein solches Brillenscharnier ist in der DE-B-36 24 245 beschrieben und löst in vorteilhafter Weise die Aufgabe, die Vorteile bisheriger Brillenscharniere bezüglich Formschönheit, Unauffälligkeit und Stabilität aufrechtzuerhalten, dennoch aber im Falle einer Überbelastung und Beschädigung, vor allem eines Bruches im Scharnierbereich die erforderliche Reparatur einfach und preiswert zu ermöglichen, wobei der Brillenbügel selbst weiter verwendbar bleibt.

Es besteht nun die Aufgabe, dieses Brillenscharnier so auszubilden, daß seine Montage einfach und schnell und dennoch mit der erforderlichen hohen Präzision durchführbar ist, insbesondere die beiden von dem Verbindungsteil in Gebrauchsstellung verbundenen Halter mit Sicherheit an den Brillenteilen so zueinander fluchtend angeordnet sind, daß das Verbindungsteil ohne Verkantungen und mit der gewünschten Leichtgängigkeit daran angreifen kann.

Die Lösung dieser Aufgabe besteht darin, daß die beiden beabstandeten Halter vor ihrer Befestigung an dem Brillenbügel und dessen Fortsetzung zu der Brillenfassung über einen seitlich des zwischen ihnen befindlichen Abstandes angeordneten, diesen Abstand überbrückenden Steg fest verbunden sind, daß dieser Steg an dem Brillenbügel und dessen Fortsetzung befestigbar und nach der Befestigung zusammen mit dem Brillenbügel durchtrennbar ist und daß der Abstand der Mitte der beiden Halter des einstückigen Scharnierteiles vor der Durchtrennung ihres Steges gegenüber dem Abstand der Mitten der Haltelochungen des Verbindungsteiles um das Maß der Dicke des Trennschnittes größer ist.

Auf diese Weise wird sichergestellt, daß die an den beiden Haltern jeweils befindlichen Schlitze zur Aufnahme des plättchenförmigen Verbindungsteiles genau mit einander fluchten bzw. nach dem Einsetzen des Verbindungsteiles der Brillenbügel genau mit seiner zur Brillenfassung führenden Fortsetzung fluchtet. Es ergibt sich somit eine leichtgängige Scharnierverbindung, bei der eine Verklemmung des Verbindungsteiles aufgrund ungenauer Montage der beiden beabstandeten Halter ausgeschlossen ist. Somit kann diese Scharnierverbindung nicht nur sehr schnell und weitgehend mit üblichen Fertigungsvorrichtungen und -methoden hergestellt werden, sondern es können dabei auch in erwünschtem Maße sehr enge Toleranzen innerhalb des Brillenscharnieres eingehalten werden.

Die Trennstelle an dem Brillenbügel gegenüber der Fortsetzung zu der Brillenfassung kann mit der Trennstelle zwischen den beiden Haltern des ursprünglich insbesondere einstückigen Scharnierteiles in Gebrauchsstellung übereinstimmen bzw. auf gleicher Höhe liegen. Somit kann mit ein und demselben Trennschnitt der Brillenbügel von seiner Fortsetzung zur Brillenfassung abgetrennt und gleichzeitig die Verbindung zwischen den beiden Haltern des Scharnieres durchgetrennt werden. Da dann zur Verbindung der beiden Halter mit Hilfe des Verbindungsteiles diese geradlinig aufeinanderzuzubewegen sind, ergibt sich in vorteilhafter Weise auch an der Trennstelle zwischen Brillenbügel und Fortsetzung jeweils eine rechtwinklig zur Außenseite des Brillenbügels verlaufende Schnittfläche und somit bei aufgeklapptem Brillenbügel ein relativ großflächiger Anschlag. Es wird also zusätzlich durch die erfindungsgemäße Ausgestaltung des Brillenscharnieres auch eine Verbesserung des Anschlages des relativ zu seiner Fortsetzung schwenkbaren Brillenbügels geschaffen.

Der Scharnierteil und seine beiden Halteteile sind zweckmäßigerweise spiegelsymmetrisch zu der Trennstelle ausgebildet. Dadurch können sie sowohl für den rechten als auch für den linken Brillenbügel gleich ausgebildet sein und verwendet werden.

Für eine kompakte und dennoch stabile Ausbildung des Brillenscharnieres ist es vorteilhaft, wenn die beiden Halter gegenüber der vom Brillenbügel abgewandten Oberfläche ihres Befestigungssteges im Bereich ihres Abstandes und Zwischenraumes zumindest um die in Gebrauchsstellung horizontale Breite des Verbindungsteiles vorstehen. Somit kann dieses Verbindungsteil in der im Hauptpatent beschriebenen Weise seitlich des Befestigungssteges den Zwischenraum der beiden Halter in Gebrauchsstellung überbrücken und hier die gewünschte Sollbruchstelle herstellen.

Zur Erfindung gehört auch die Lösung der Aufgabe, ein Verfahren zur Herstellung und/oder Montage eines Brillenscharnieres der eingangs erwähnten Art zu schaffen, welches schnell und einfach durchführbar ist und zu einer präzisen Halterung des Brillenbügels über sein Brillenscharnier führt.

Das erfindungsgemäße Verfahren ist dabei dadurch gekennzeichnet, daß an den zunächst einstückig mit einer Fortsetzung der Brillenfassung verbundenen Brillenbügel ein einstückiger Scharnierteil mit den zwei beabstandeten Haltern im Bereich der späteren Trennstelle des Brillenbügels befestigt, danach der Brillenbügel und der Scharnierteil gemeinsam durchgetrennt und anschließend die Halter des Scharnierteiles um die Stärke des Trennschnittes aufeinanderzubewegt bzw. zusammengeführt werden und dann der Verbindungsteil in die beiden vereinzelten Halter eingesetzt und befestigt wird. Es ist dann sichergestellt, daß dieser Verbindungsteil mit sehr geringen Toleranzen in die beiden getrennten Halter paßt, so daß ohne die Gefahr von Verkantungen an dem Verbindungsteil eine dennoch leichtgängige und präzise Verschwenkung des Brillenbügels gegeben ist.

Dabei kann das zunächst einstückige Scharnierteil an der Innenseite des Brillenbügels und dessen Fortsetzung zur Brillenfassung angeschweißt, angelötet, angeklebt oder beidseits der späteren Trennstelle angenietet werden. Besonders zweckmäßig ist ein Schweißvorgang, der auch bei der herkömmlichen Montage von Brillenscharnieren bekannt und üblich ist und somit mit den üblichen Einrichtungen schnell und einfach durchgeführt werden kann.

Zum Durchtrennen des Brillenbügels und des Scharnierteiles wird ein Trennschnitt zweckmäßigerweise rechtwinklig zur Längserstreckung des Brillenbügels durchgeführt. Zwar wäre auch ein - schräger Schnitt denkbar, jedoch ergibt ein rechtwinkliger Trennschnitt eine gute Anschlagfläche des Brillenbügels in seiner aufgeklappten Postition gegenüber seiner Fortsetzung zur Brillenfassung hin. Dabei können der Brillenbügel und das montierte Scharnierteil zur Trennung gemeinsam durchgesägt werden.

In scheinbar widersinniger Weise wird also zunächst ein Scharnierteil mit den beiben in Gebrauchsstellung später relativ zueinander bewegbaren Haltern einstückig und starr verbunden hergestellt und in dieser einstückigen Verbindung auch an dem ebenfalls einstückig mit der Brillenfassung befestigten Brillenbügel im Bereich von dessen späterer Trennstelle fixiert, wodurch aber sichergestellt ist, daß die beiden Halter und ihre Aufnahmen für das Verbindungsteil mit Sicherheit und großer Präzision fluchten, so daß der Verbindungsteil mit entsprechend engen Toleranzen nach der Trennung eingefügt werden kann.

Nachstehend ist die Erfindung mit ihren ihr als wesentlich zugehörenden Einzelheiten anhand der Zeichnung noch näher beschrieben.

Es zeigt in z.T. schematisierter Darstellung:

Fig. 1 den Bereich des Brillenscharnieres an dem Brillenbügel, wobei dieser noch mit seiner Fortsetzung zur Brillenfassung hin einstückig verbunden ist und der zwei beabstandete Halter aufweisende Scharnierteil daran angebracht, aber ebenfalls noch einstückig ist, mit dem daran einzusetzenden, bezüglich seines Lochungsabstandes noch nicht mit dem des Scharnierteiles übereinstimmenden Verbindungsteil,

Fig. 2 eine Draufsicht des Brillenscharnieres gemäß Fig. 1 nach der Fertigstellung,

Fig. 3 eine Seitenansicht des Brillenscharnieres gemäß Fig. 2 und Fig. 4 eine Stirnansicht dieses Brillenscharnieres.

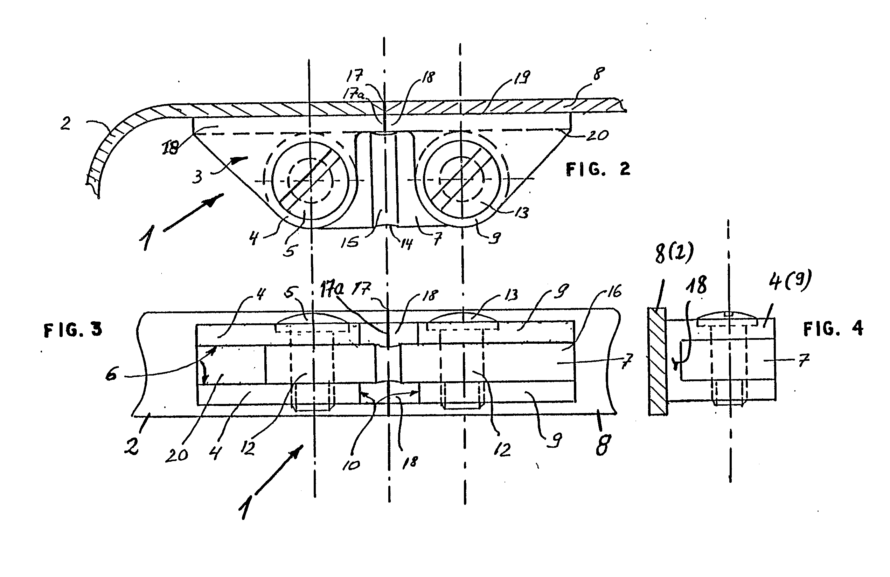

Ein im ganzem mit 1 bezeichnetes Brillenscharnier hat wie im Hauptpatent 36 24 245.4 nach seiner endgültigen Montage und Fertigstellung in Gebrauchstellung an der nur teilweise angedeuteten Brillenfassung bzw. einer Fortsetzung 2 des Brillenbügels 8, der sogenannten Brillenbacke, ein erstes Scharnierteil 3, welches zwei in Gebrauchsstellung gemäß Fig. 3 und 4 übereinanderliegende Halter 4 mit miteinander fluchtenden Durchtrittsöffnungen für einen Scharnierstift 5 und ein in den Abstand 6 zwischen diesen beiden Haltern 4 passendes Verbindungsteil 7 ebenfalls mit einer Lochung für den Scharnierstift 5 aufweist. Das Verbindungsteil 7 ist außer dieser Befestigung an dem Scharnierteil 3 noch am Brillenbügel 8 über zwei weitere mit Abstand 6 übereinander angeordnete Halter 9 befestigt, zwischen welchen das Verbindungsteil 7 wiederum lösbar befestigt ist. Die beiden jeweils beabstandeten Halter 4 einerseits der Brillenbacke 2 und die Halter 9 andererseits des Brillenbügels 8 haben gemäß Fig. 2 und 3 in Gebrauchsstellung in Richtung der Erstreckung des Brillenbügels 8 und des Verbindungsteiles 7 einen lichten Abstand und Zwischenraum 10 zwischen sich, welcher in dieser Gebrauchsstellung von dem Verbindungsteil 7 überbrückt ist. Die Stärke oder Dicke des Verbindungsteiles 7 ist zumindest in diesem von ihm überbrückten Abstand- oder Zwischenraumbereich so gering gewählt, daß der Zwischenraum 10 bzw. der Verbindungsteil 7 innerhalb dieses Zwischenraumes 10 eine Sollbruchstelle bildet. Dabei ist das Verbindungteil 7 im Ausführungsbeispiel ein flaches Plättchen, welches zwei Verankerungsbereiche 11 jeweils mit einer vertikalen Lochung 12 hat, deren eine zu dem Scharnierstift 5 der Halter 4 paßt, während die andere Lochung 12 von einem Haltestift 13 an den Haltern 9 des Brillenbügels 8 durchsetzt ist. Dabei können der Haltestift 5 und der Haltestift 13 identisch ausgebildet sein.

Die Sollbruchstelle an dem Verbindungteil 7 ist im Ausführungsbeispiel durch Querschnittsverminderungen 15 im Zwischenraumbereich 10 ausgebildet.

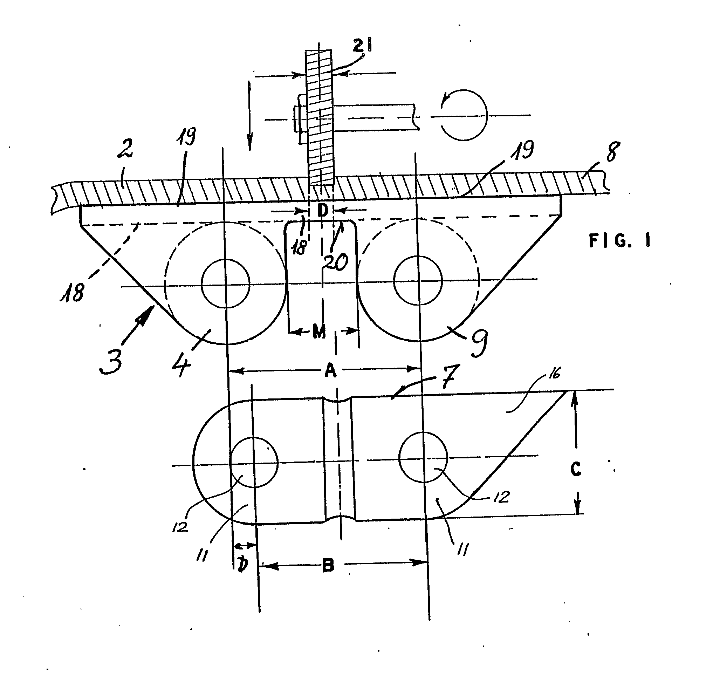

Die Trennstelle 17 zwischen dem Brillenbügel 8 und der Fortsetzung zur Brillenfassung, also der Brillenbacke 2, befindet sich gemäß Fig. 2 und 3 praktisch in der Mitte in einer Symmetrieebene zwischen den beiden Haltern 5 und 9, wobei Fig. 1 bis 3 verdeutlichen, daß das gesamte Scharnierteil 3 mit seinen Haltern 4 und 9 spiegelsymmetrisch zu dieser Trennstelle 17 ausgebildet sind, so daß sie sowohl am rechten als auch am linken Brillenbügel einer Brille verwendet werden können.

Vor allem bei gemeinsamer Betrachtung der Figuren 1 und 2 ergibt sich, daß die beiden beabstandeten Halter 4 und 9 vor und auch kurz nach ihrer Befestigung an dem Brillenbügel 8 und dessen Fortsetzung 2 zu der Brillenfassung über einen seitlich des zwischen ihnen befindlichen Abstandes oder Zwischenraumes 10 angeordneten, diesen Abstand 10 überbrückenden Steg 18 fest verbunden sind, daß dieser Steg 18 an dem Brillenbügel 8 und dessen Fortsetzung 2 befestigbar und nach der Befestigung zusammen mit dem Brillenbügel 8 durchtrennbar ist, also durchgetrennt wird, wenn der Brillenbügel 8 von seiner Fortsetzung 2 abgetrennt wird. Dabei verdeutlicht Fig. 1, daß der Abstand A der Mitten M der beiden Halter 4 und 9 des zunächst einstückigen Scharnierteiles 3 vor der Durchtrennung ihres Steges 18 gegenüber dem Abstand B der Haltelochungen 12 des Verbindungsteiles 7 um das Maß der Dicke D des Trennschnittes größer ist. Im Hinblick auf diese gemeinsame Durchtrennung ergibt sich also, daß die Trennstelle 17 an dem Brillenbügel 8 gegenüber der Fortsetzung 2 zu der Brillenfassung mit der Trennstelle 17a zwischen den beiden Haltern 4 und 9 des ursprünglich einstückigen Scharnierteiles 3 in Gebrauchsstellung übereinstimmt bzw. auf gleicher Höhe liegt, wie es in den Figuren 2 und 3 deutlich erkennbar ist. Die Befestigungsstellen 19 des Scharnierteiles 3 an dem Brillenbügel 8 und an dessen Fortsetzung 2 sind deshalb beidseits der Trennstelle 17 vorgesehen oder erstrecken sich über diese Trennstelle 17 beidseits hinweg.

Fig. 1 und 2 zeigt dabei, daß die beiden Halter 4 und 9 gegenüber der vom Brillenbügel 8 abgewandten Oberfläche 20 ihres Befestigungssteges 18 im Bereich ihres Abstandes und Zwischenraumes 10 zumindesst um die in Gebrauchsstellung horizontale Breite C des Verbindungsteiles 7 vorstehen. Dies ergibt eine kompakte Ausbildung des gesamten Brillenscharnieres 1 mit guter Festigkeit vor allem in der Schwenkebene der Brillenbügel.

Vor allem an Fig. 1 erkennt man deutlich, wie das Brillenscharnier 1 auf einfache und zweckmäßige Weise hergestellt und montiert werden kann. Zunächst wird dabei an den noch einstückig mit der Fortsetzung 2 der Brillenfassung verbundenen Brillenbügel 8 das ebenfalls zunächst einstückige Scharnierteil 3 mit den zwei beabstandeten Haltern 4 und 9 im Bereich der späteren Trennstelle 17 befestigt. Danach werden der Brillenbügel 8 und seine Fortsetzung 2 einerseits und der Scharnierteil 3 andererseits gemeinsam durchgetrennt, wobei in Fig. 1 der Beginn dieses Trennungsschnittes mittels eines entsprechenden Trennwerkzeuges 21, im Ausführungsbeispiel einer Säge, angedeutet ist. Anschließend werden nun die Halter 4 und 9 des jetzt zweistückigen Scharnierteiles 3 um die Stärke D des Trennschnittes aufeinander zubewegt bzw. zusammengeführt und dann der Verbindungsteil 7 in die beiden vereinzelten Halter 4 und 9 eingesetzt und befestigt, wonach die Situation gemäß Fig. 2 bis 4 erreicht ist.

Dabei kann das zunächst einstückige Scharnierteil 3 an der Innenseite des Brillenbügels 8 und seiner Fortsetzung 2 angeschweißt, evtl. auch angelötet, angeklebt oder sogar beidseits der späteren Trennstelle 17 angenietet oder angeschraubt werden. Am zweckmäßigsten ist jedoch ein Schweiß- oder Lötvorgang, wie er für die Befestigung von Brillenscharnieren bekannt ist.

Fig. 1 zeigt auch, daß zum Durchtrennen des Brillenbügels 8 und des Scharnierteiles 3 der Trennschnitt rechtwinklig zur Längserstreckung des Brillenbügels 8 durchgeführt wird. Dies ergibt eine entsprechend große Anschlagfläche innerhalb der Trennstelle 17 für den aufgeklappten Brillenbügel 8. Der Trennschnitt ist dabei im Ausführungsbeispiel ein Sägeschnitt, der entsprechend präzise durchgeführt werden kann und auch zu einer entsprechend genauen Schnittstärke D führt, um welche der Abstand der Mitten M der Halter 4 und 9 zunächst ja größer ist als der der Mitten der Lochungen 12 des Verbindungsteiles 7. Dadurch wird erreicht, daß nach Durchführung des Trennschnittes und dem Zusammenführen der nun voneinander getrennten Teile der Verbindungsteil 7 mit dem gewünschten geringen Toleranzen in die Halter 4 und 9 paßt.

## Ansprüche

1. Brillenscharnier (1) mit einem an der Brillenfassung (2) befestigten Scharnierteil (3), welches zwei in Gebrauchsstellung übereinanderliegende Halter (4) mit miteinander fluchtenden Durchtrittsöffnungen für einen Scharnierstift (5) zum Befestigen eines in den Abstand (6) zwischen diesen beiden Haltern (4) passenden plättchenförmigen Verbindungsteiles (7) aufweist, welches Verbindungsteil mit einem weiteren Haltestift (13) an am Brillenbügel (8) vorgesehenen, übereinander angeordneten Haltern (9) mittels einem weiteren Haltestift (13) befestigt ist, wobei das Verbindungsteil (7) auf der einen Seite als Teil des Scharnieres (1) ausgebildet und auf der anderen Seite formschlüssig verbunden und an den Halter (4, 9) lösbar befestigt ist, die beiden jeweils beabstandeten Halter (4, 9) in Gebrauchsstellung in Richtung der Erstreckung des Brillenbügels (8) und/oder des Verbindungsteiles (7) einen lichten Abstand und Zwischenraum (10) zwischen sich haben, welcher von dem Verbindungsteil (7) überbrückt ist, und wobei die Stärke des Verbindungsteiles (7) zumindest in dem von ihm überbrückten Zwischenraum (10) so gering gewählt ist, daß der Zwischenraum (10) eine Sollbruchstelle an dem Verbindungsteil (7) ist, **dadurch gekennzeichnet, daß** die beiden beabstandeten Halter (4, 9) vor ihrer Befestigung an dem Brillenbügel (8) und dessen Fortsetzung (2) zu der Brillenfassung über einen seitlich des zwischen ihnen befindlichen Abstandes (10) angeordneten, diesen Abstand (10) überbrückenden Steg (18) fest verbunden sind, daß dieser Steg (18) an dem Brillenbügel (8) und dessen Fortsetzung (2) befestigbar und nach der Befestigung zusammen mit dem Brillenbügel (8) durchtrennbar ist und daß der Abstand (A) der Mitten (M) der beiden Halter (4, 9) des einstückigen Scharnierteiles (3) vor der Durchtrennung des Steges (18) gegenüber dem Abstand (B) der Mitten der Haltelochungen (12) des Verbindungsteiles (7) um das Maß der Dicke (D) des Trennschnittes größer ist.

2. Brillenscharnier nach Anspruch 1, dadurch gekennzeichnet, daß die Trennstelle (17) an dem Brillenbügel (8) gegenüber der Fortsetzung (2) zu der Brillenfassung mit der Trennstelle (17a) zwischen den beiden Haltern (4, 9) des ursprünglich insbesondere einstückigen Scharnierteiles (3) in Gebrauchsstelung übereinstimmt bzw. auf gleicher Höhe liegt.

3. Brillenscharnier nach Anspruch 1 oder 2, dadurch gekennzeichnet, daß die Befestigungsstellen (19) des Scharnierteiles (3) an dem Brillenbügel (8) und dessen Fortsetzung (2) zur Brillenfassung hin beidseits der Trennstelle (17) vorgesehen sind oder sich über die Trennstelle (17) beidseitig hinweg erstrecken.

4. Brillenscharnier nach einem der Ansprüche 1 bis 3, dadurch gekennzeichnet, daß der Scharnierteil (3) und seine beiden Halteteile (4, 9) spiegelsymmetrisch zu der Trennstelle (17, 17a) ausgebildet sind.

5. Brillenscharnier nach einem der Ansprüche 1 bis 4, dadurch gekennzeichnet, daß die beiden Halter (4, 9) gegenüber der vom Brillenbügel (8) abgewandten Oberfläche (20) ihres Befestigungssteges (18) im Bereich ihres Abstandes und Zwischenraumes (10) zumindest um die in Gebrauchsstellung horizontale Breite (C) des Verbindungsteiles (7) vorstehen.

6. Verfahren zur Herstellung und/oder Montage eines Brillenscharnieres gemäß Oberbegriff des Anspruches 1, **dadurch gekennzeichnet,** daß an den zunächst einstückig mit einer Fortsetzung (2) der Brillenfassung verbundenen Brillenbügel (8) ein einstückiger Scharnierteil (3) mit den zwei beabstandeten Haltern (4, 9) im Bereich der späteren Trennstelle (17) des Brillenbügels (8) befestigt, danach der Brillenbügel (8) und der Scharnierteil gemeinsam durchgetrennt und anschließend die Halter (4, 9) des Scharnierteiles (3) um die Stärke (D) des Trennschnittes aufeinanderzubewegt bzw. zusammengeführt werden und dann der Verbindungsteil (7) in die beiden vereinzelten Halter (4, 9) eingesetzt und befestigt wird.

7. Verfahren nach Anspruch 6, dadurch gekennzeichnet, daß das zunächst einstückige Scharnierteil (3) an der Innenseite des Brillenbügels (8) und dessen Fortsetzung (2) zur Brillenfassung angeschweißt, angelötet, angeklebt oder beidseits der späteren Trennstelle (17) angenietet wird.

8. Verfahren nach Anspruch 6 oder 7, dadurch gekennzeichnet, daß zum Durchtrennen des Brillenbügels (8) und des Scharnierteiles (3) ein Trennschnitt rechtwinklig zur Längserstreckung des Brillenbügels (8) durchgeführt wird.

9. Verfahren nach einem der Ansprüche 6 bis 8, dadurch gekennzeichnet, daß der Brillenbügel und das montierte Scharnierteil zur Trennung gemeinsam durchgesägt werden.

FIG. 1

FIG. 2

FIG. 3

FIG. 4